# EUROPÄISCHE PATENTANMELDUNG

(11) **EP 0 654 399 A2**
(43) Veröffentlichungstag der Anmeldung: **24.05.1995**
(21) Anmeldenummer: 94103836.6
(22) Anmeldetag: 12.03.1994
(51) Int. Cl.: B62J 6/06, B62J 6/00

(54) **Halter für elektrische Geräte eines Zweirades**

(30) Priorität: 23.11.1993 DE 4339815
(71) Anmelder: UNION Sils, van de Loo & Co. GmbH, D-58730 Fröndenberg (DE)
(72) Erfinder: Eppmann, Dirk, D-59174 Kamen (DE); Kreuseler, Konrad, D-59469 Ense (DE); Konzorr, Hubert, D-58730 Fröndenberg (DE)
(74) Vertreter: COHAUSZ HASE DAWIDOWICZ & PARTNER

(57) **Zusammenfassung**

Die Erfindung betrifft einen Halter (1) zum Befestigen eines elektrischen Gerätes (8,7,17,18) wie einen Scheinwerfer (8), einen Dynamo (7), einen Akku (17) oder ein Rücklicht (18) an einem Zweirad, wobei am Halter (1) ein, zwei oder mehr elektrische Geräte jeweils durch eine formschlüssige Rastverbindung lösbar befestigbar sind.

## Beschreibung

Die Erfindung betrifft einen Halter zum Befestigen eines elektrischen Gerätes wie einen Scheinwerfer, einen Dynamo, einen Akku oder ein Rücklicht an einem Zweirad.

Bei einem Fahrrad ist es üblich, den Scheinwerfer vorn im Lenkerbereich und das Rücklicht am hinteren Schutzblechende anzuordnen, wobei die gemeinsame Stromversorgung durch einen Dynamo erfolgt, der an der vorderen oder hinteren Gabelstrebe angebaut ist. Diese Anordnung erfordert die Verlegung der Stromleitungen in Form eines oder mehrerer Kabel entlang oder innerhalb der Rahmenrohre von vorn nach hinten.

Hierzu etablierte sich in den letzten Jahren - zur herkömmlichen Fahrrad-Lichtanlage - in zunehmendem Maße eine sogenannte Standlicht-Beleuchtung, d. h. ein Bauelement, welches vom Dynamo in bestimmten Geschwindigkeitsbereichen initiiert wird und die Beleuchtung (Scheinwerfer / Rücklicht) über eine elektronische Steuereinheit wahlweise vom Dynamo oder einem aufladbaren Akku mit Strom / Spannung speist.

Die bisherige Fahrradbeleuchtung benötigt einen erheblichen Aufwand an Verkabelung von der Vorder- zur Hinterseite des Fahrrades, in der Regel an der Rahmenrohr-Außenseite und im weiteren am hinteren Schutzblech durch eingelassene Kontaktbahnen zum Rücklicht. Dies wird durch die zusätzliche, vom Anwender installierte Standlichtbeleuchtung zum Teil zu einem Kabel-Wirrwarr am oder im Fahrradrahmen mit allen Risiken der Beschädigung und somit einem Ausfall der gesamten Lichtanlage am Fahrrad.

In den letzten Jahren wurden daher bereits Lösungen angeboten, die Kabel im Fahrrad-Rahmenrohr zu verlegen. Dies ist mit einem erheblichen Kostenaufwand sowie der Schwierigkeit verbunden, das Kabel über den Lenkungsbereich nach vorn zum Scheinwerfer zu führen.

Aufgabe der Erfindung ist es, die elektrische Versorgung eines Zweirades so zu verbessern, daß bei einfacher Konstruktion und Montage ein Verlegen von Kabeln am Zweirad weitgehend vermieden wird und hierbei eine hohe Flexibilität und eine leichte Handhabung durch den Benutzer erreicht wird.

Diese Aufgabe wird erfindungsgemäß dadurch gelöst, daß am Halter ein, zwei oder mehr elektrische Geräte jeweils durch eine formschlüssige Rastverbindung lösbar befestigbar sind.

Hierdurch werden elektrisch getrennte Baueinheiten am Zweirad geschaffen, die bei einfachster Konstruktion leicht zu montieren sind und ein Verlegen von Kabeln am Fahrrad außerhalb des jeweiligen Halters erübrigt. Es wird eine hohe Flexibilität unter anderem dadurch erreicht, daß an dem Halter unterschiedlichste Geräte angebracht und leicht wieder abgenommen werden können, so daß Hersteller und Benutzer ein breites Spektrum von Anwendungsmöglichkeiten haben. Es wird eine elektrische und bauliche Trennung von vorderer und hinterer Beleuchtung des Zweirades erreicht, wobei ein baukastenähnliches System vorzugsweise erzielbar ist.

Auch besteht der erhebliche Vorteil, daß die einzelnen Geräte bzw. Aggregate jederzeit vom Benutzer abgenommen werden können, so daß nicht nur die Diebstahlsicherheit erhöht wird, sondern auch jederzeit nach Bedarf das Gewicht des Zweirades verringerbar ist.

Da jede Baueinheit einen eigenen Dynamo besitzt, der in der Regel nur einen Verbraucher speist, kann der Dynamo verhältnismäßig schwach und damit sehr klein ausgeführt sein.

Vorzugsweise wird vorgeschlagen, daß am und/oder im Halter mindestens eine elektrische Leitung zur Verbindung der Geräte befestigt ist. Auch können die Geräte über Kontakte und/oder Steckverbinder mit dem Halter elektrisch lösbar verbunden sein. Auch kann die elektrische Leitung von flachen Kontaktbahnen gebildet sein. Auch ist es von Vorteil, wenn von mindestens einer elektrischen Leitung eine Kontaktzunge für einen externen Anschluß abzweigt.

Besonders vorteilhaft ist es, wenn der Halter L-förmig gebogen ist. Hierdurch kann der Halter besonders vorteilhaft an den jeweiligen baulichen Gegebenheiten insbesondere an der vorderen und hinteren Gabel angepaßt werden.

Von größtem Vorteil ist es, wenn ein Gerät insbesondere ein Scheinwerfer oder Rücklicht an einem Ende des länglichen Halters und ein zweites Gerät am anderen Ende lösbar befestigt ist. Auch kann der Halter ein Gehäuse bilden oder tragen, im dem mindestens ein Akkumulator enthalten ist.

Ferner wird eine besonders einfache Konstruktion und Handhabung dadurch erreicht, wenn der Dymamo durch ein rastendes Formgehemme oder Formgesperre in der vom Reifen abgehobenen Stellung gehalten ist.

Vorzugsweise wird vorgeschlagen, daß der Halter am Gabelkopf, am Schutzblechende, im oberen Bereich der Hinterradgabel oder nahe des Tretlagers befestigt ist. Besonders vorteilhaft ist es auch, wenn der Halter durch eine formschlüssige Rastverbindung lösbar am Zweirad befestigt ist, so daß der gesamte Halter vom Zweirad abnehmbar ist. Von Vorteil ist, wenn der Halter an seiner Rückseite mindestens eine konkave Einwölbung besitzt, mit der er am Zweiradprofil verdrehsicher anliegt. Eine besonders vorteilhafte Anwendung wird erreicht, wenn bei einem Befestigen von nur einem Gerät am Halter dieses Gerät ein Dynamo ist.

Ausführungsbeispiele der Erfindung sind in den Zeichnungen in Seitenansichten und teilweisen Schnitten dargestellt und werden im folgenden näher beschrieben. Es zeigen
- Fig. 1: einen am Kopf der vorderen Gabel befestigten Halter in L-Form mit Scheinwerfer und Dynamo,
- Fig. 2: einen Halter ähnlich Figur 1, aber mit Akkumulatoren innerhalb des Halters,
- Fig. 3: einen Halter in L-Form mit Rücklicht und Dynamo im oberen Bereich der hinteren Gabel,
- Fig. 4: einen Halter in gerader oder leicht gekrümmter Form mit Dynamo und Rücklicht am unteren Ende des hinteren Schutzbleches,
- Figur 5: einen Halter in L-Form mit Dynamo im Bereich des Tretlagers.

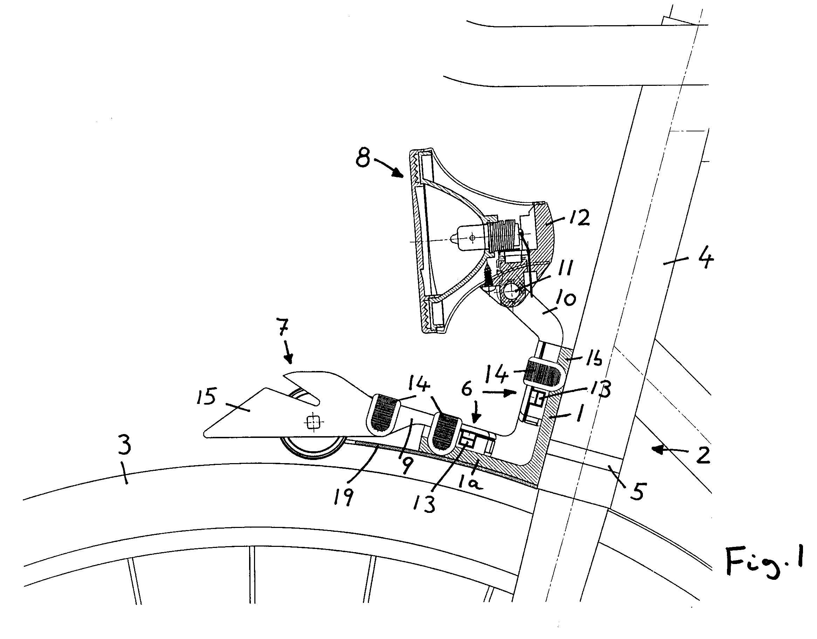

Im Ausführungsbeispiel nach Figur 1 ist der L-förmig abgebogene Halter 1 am Gabelkopf 2 des Vorderrades 3 so befestigt, daß der untere etwa waagerechte Schenkel 1a des Halters 1 auf der Oberseite des Schutzbleches aufliegt und der zweite etwa senkrechte Schenkel 2a an der Vorderseite des Lenkkopfrohres 4 anliegt. Hierbei besitzt die Rückseite des Schenkels 2a eine konkave Längsausnehmung, die an die Krümmung des Lenkkopfrohres 4 angepaßt ist und damit mit einem kleinen Bereich das Rohr umfaßt, wodurch ein Verdrehen des Halters verhindert wird. Hierbei ist der Halter 1 durch eine Schraube gehalten, die durch eine Querbohrung 5 geführt ist, die an dieser Stelle vorhanden ist.

An beiden Enden der Schenkel 1a und 1b ist jeweils über eine Rastverbindung 6 ein Gerät befestigt. Dieses Gerät ist beim unteren Schenkel 1a ein Dynamo 7 und beim oberen Schenkel 1b ein Scheinwerfer 8. Für diese Befestigung weist das Gehäuse des Dynamos 7 eine Verlängerung 9 auf. Der Scheinwerfer 8 besitzt hierfür einen Arm 10, der am unteren Auge 11 des Scheinwerfergehäuses 12 angelenkt ist.

Beide Rastverbindungen 6 jeden Halters 1 bestehen aus einem lösbaren Rast-Formgesperre für Schubbewegungen, wobei jedes Ende des Halters 1 einen Adapter bildet, der ein ausweichbares Raststück besitzt, das in eine Ausnehmung des Adapters hineinreicht, wobei in diese Ausnehmung das zu befestigende Teil eingeschoben wird, um dann dort mit einem Rücksprung hinter dem ausweichbaren federnden Teil einzurasten. Dieses federnde Rastteil ist so weit nach außen geführt, daß es zumindest an einer Außenseite des Halters 1 einen Bedienknopf 13 bildet, der bei Eindrücken, Ziehen und/ oder Verschieben das Rastteil aus der sperrenden Stellung heraus bewegt, so daß bei Bedienung des Knopfes 13 das gehaltene Gerät 7,8 frei wird.

Die Knöpfe können an jedem Schenkel 1a, 1b zu beiden Seiten angeordnet sein und ferner können an den Seiten der Schenkel 1a, 1b als auch der Geräte 7,8 Grifflächen 14 befestigt sein, um die Teile leichter greifen bzw. bedienen zu können.

Der Halter ist aus einem hochfesten Kunststoff hergestellt und weist vorzugsweise im Innern elektrische Leitungen, vorzugsweise in Form eines zweiadrigen Leitungsbandes auf. Das Leitungsband ist entweder in den Kunststoff des Halters eingegossen oder befindet sich in einer dazu angeordneten Längsnut oder Längskanal. Im Bereich der Rastverbindungen 6 befinden sich Kontakte insbesondere Zungen sowohl an den Verbindungsteilen der Geräte als auch an den Enden der Schenkel 1a, 1b, so daß eine Kontaktierung automatisch erfolgt, sobald ein Gerät in den Adapter der Rastverbindung eingeschoben ist.

Um den Dynamo in der vom Reifen abgehobenen Stellung zu halten, ist im oder am Gehäuse 15 des Dynamos ein rastendes Formgehemme oder Formgesperre angeordnet, das durch Knopfdruck oder durch Druck auf das Gehäuse 15 lösbar ist. Ferner kann am Halter 1 eine Kontaktzunge vorstehen, um eine elektrische Verbindung zu anderen Verbrauchern schaffen zu können.

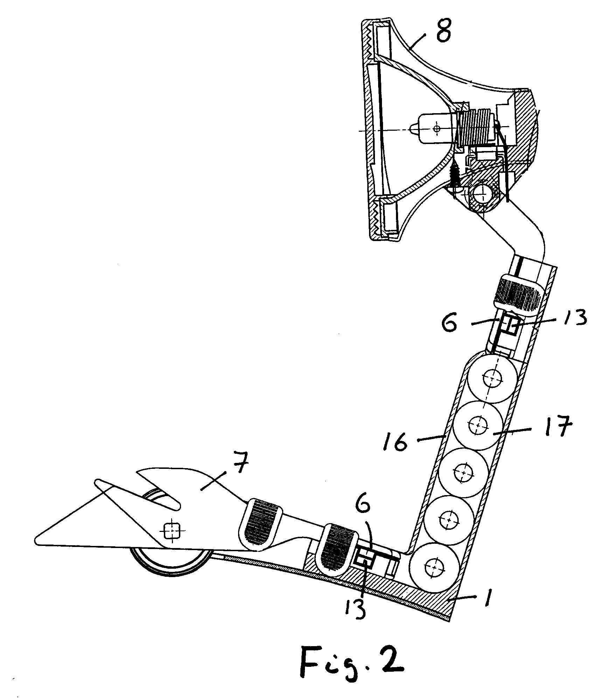

Das Ausführungsbeispiel nach Figur 2 unterscheidet sich von dem nach Figur 1 dadurch, daß der Halter 1 ein Gehäuse 16 bildet, in dem Akkumulatoren 17 einliegen, die den vom Dynamo erzeugten Strom speichern, so daß über eine bestimmte Zeit bei abgehobenem oder abgenommenem Dynamo 7 Strom zur Verfügung steht.

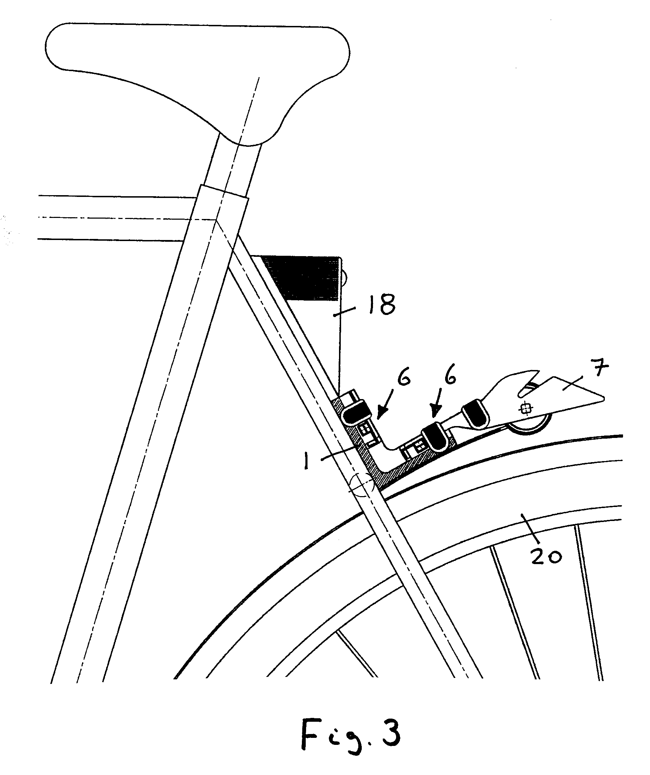

Bei dem Ausführungsbeispiel nach Figur 3 ist der L-förmige Halter 1 am oberen Bereich der hinteren Gabel an der Rückseite befestigt, wobei er wiederum direkt auf dem Schutzblech aufliegt oder in einem geringen Abstand dazu steht. Am oberen Ende des Schenkels 1b ist durch die formschlüssige Rastverbindung ein Rücklicht 18 lösbar befestigt. Diese Konstruktion erlaubt aber auch den umgekehrten Fall, d. h. das Rücklicht 18 ist am Fahrrad fest und der Halter 1 ist am Rücklicht 18 lösbar befestigt.

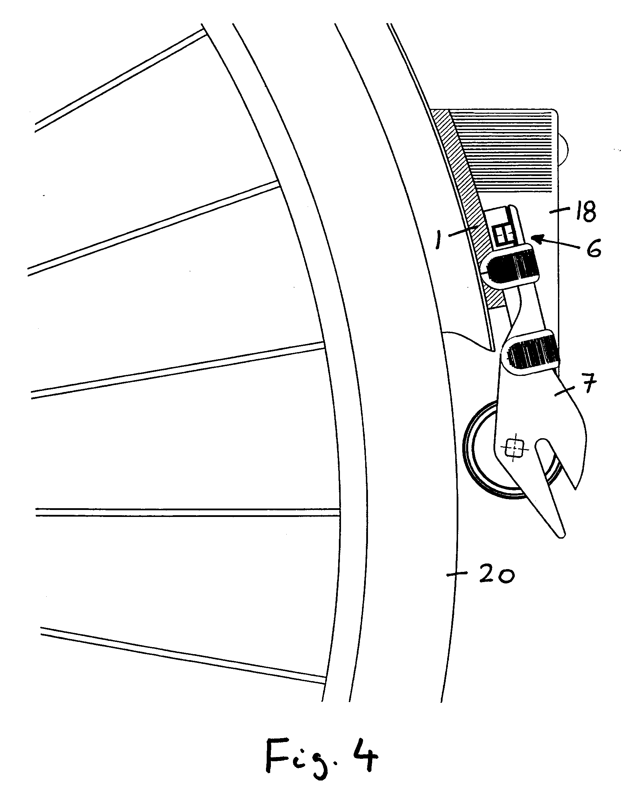

Beim Ausführungsbeispiel nach Figur 4 ist der Halter 1 am unteren Ende des hinteren Schutzbleches befestigt. Am Halter 1 ist im oberen Bereich ein Rücklicht 18 und im unteren Bereich ein Dynamo 7 einrastend lösbar befestigt. Allerdings kann das Rücklicht auch unlösbar am Halter 1 angeordnet sein, wobei insbesondere das Rücklicht ein Teil des Halters bilden kann. Der Dynamo 7 ragt wiederum so weit über das Ende des Schutzbleches 19 hinaus, daß er den Reifen des Hinterrades 20 erreichen kann.

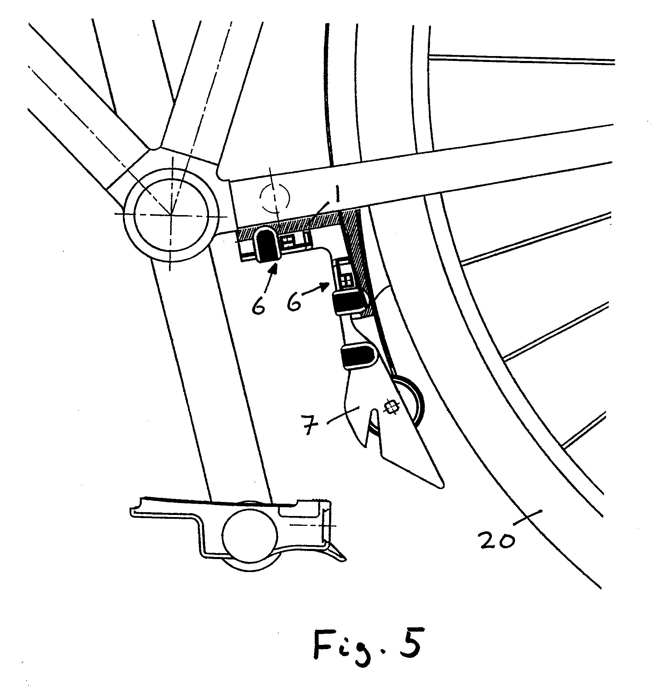

Das Ausführungsbeispiel nach Figur 5 weist einen L-förmigen Halter 1 nahe des Tretlagers auf, der mit seinem oberen, etwa waagerechten Schenkel an oder zwischen den zwei Querstreben befestigt ist, die vom Tretlager zur Hinterradachse verlaufen. Am unteren Ende des etwa senkrechten Schenkels 1b ist der Dynamo 7 lösbar einrastend befestigt.

## Patentansprüche

1. Halter (1) zum Befestigen eines elektrischen Gerätes wie einen Scheinwerfer (8), einen Dynamo (7), einen Akku (17) oder ein Rücklicht (18) an einem Zweirad, **dadurch gekennzeichet,** daß am Halter (1) ein, zwei oder mehr elektrische Geräte (8,7,17,18) jeweils durch eine formschlüssige Rastverbindung (6) lösbar befestigbar sind.

2. Halter nach Anspruch 1, **dadurch gekennzeichnet,** daß am und/oder im Halter (1) mindestens eine elektrische Leitung zur Verbindung der Geräte (8,7,17,18) befestigt ist.

3. Halter nach Anspruch 2, **dadurch gekennzeichnet,** daß die Geräte (8,7,17,18) über Kontakte und/oder Steckverbinder mit dem Halter (1) elektrisch lösbar verbunden sind.

4. Halter nach Anspruch 2 oder 3, **dadurch gekennzeichnet,** daß die elektrischen Leitungen von flachen Kontaktbahnen gebildet sind.

5. Halter nach einem der Ansprüche 2 bis 4, **dadurch gekennzeichnet,** daß von mindestens einer elektrischen Leitung eine Kontaktzunge für einen externen Anschluß abzweigt.

6. Halter nach einem der vorgenannten Ansprüche, **dadurch gekennzeichnet,** daß der Halter (1) L-förmig abgebogen ist.

7. Halter nach einem der vorgenannten Ansprüche, **dadurch gekennzeichnet,** daß ein Gerät insbesondere ein Scheinwerfer (8) oder Rücklicht (18) an einem Ende des länglichen Halters (1) und ein zweites Gerät am anderen Ende lösbar befestigt ist.

8. Halter nach einem der vorgenannten Ansprüche, **dadurch gekennzeichnet,** daß der Halter (1) ein Gehäuse (16) bildet oder trägt, in dem mindestens ein Akkumulator (17) enthalten ist.

9. Halter nach einem der vorgenannten Ansprüche, **dadurch gekennzeichnet,** daß der Dynamo (7) durch ein rastendes Formgehemme oder Formgesperre in der vom Reifen abgehobenen Stellung gehalten ist.

10. Halter nach einem der vorgenannten Ansprüche, **dadurch gekennzeichnet,** daß der Halter (1) am Gabelkopf (2), am Schutzblechende (19), im oberen Bereich der Hinterradgabel oder nahe des Tretlagers befestigt ist.

11. Halter nach einem der vorgenannten Ansprüche, **dadurch gekennzeichnet,** daß der Halter (1) durch eine formschlüssige Rastverbindung lösbar am Zweirad befestigt ist.

12. Halter nach einem der vorgenannten Ansprüche, **dadurch gekennzeichnet,** daß der Halter (1) an seiner Rückseite mindestens eine konkave Einwölbung besitzt, mit der er am Zweiradprofil formschlüssig verdrehsicher anliegt.

13. Halter nach einem der vorgenannten Ansprüche, **dadurch gekennzeichnet,** daß bei einem Befestigen von nur einem Gerät am Halter dieses Gerät ein Dynamo ist.
